# FASCICULE DE BREVET EUROPEEN

(11) **EP 1 175 366 B1**
(45) Date de publication et mention de la délivrance du brevet: **13.10.2004**
(21) Numéro de dépôt: 00922752.1
(22) Date de dépôt: 26.04.2000
(51) Int. Cl.: B65H 63/02, B65H 63/032, C03B 37/028, C03C 25/12

(54) **PROCEDE DE FABRICATION AVEC DETECTION DE CASSE D'UN FIL**
FADENHERSTELLUNGSVERFAHREN MIT FADENBRUCHÜBERWACHUNG
PRODUCTION METHOD WITH BREAKAGE DETECTION FOR A THREAD

(30) Priorité: 28.04.1999 FR 9905350
(43) Date de publication de la demande: 30.01.2002
(73) Titulaire: Saint-Gobain Vetrotex France S.A., 73000 Chambéry (FR)
(72) Inventeur: GIBELLO, Bruno, F-73000 Chambéry (FR)
(74) Mandataire: Muller, René
(86) Numéro de dépôt international: PCT/FR2000/001103
(87) Numéro de publication internationale: WO 2000/066473

(56) Documents cités:
- DE-A- 4 312 843
- DE-A- 4 443 716
- FR-A- 2 020 384
- US-A- 3 560 178
- US-A- 3 844 497
- US-A- 4 036 622

## Description

La présente invention est relative au domaine des fibres de renforcement et des composites et, en particulier, à la fabrication de fils de verre à partir d'une multiplicité de filaments.

La fabrication de fils de verre de renforcement se fait de façon connue à partir de filets de verre fondu s'écoulant des orifices de filières, Ces filets sont étirés sous forme de filaments continus, puis ces filaments sont rassemblés en fils de base, lesquels sont ensuite collectés.

Avant leur rassemblement sous forme de fils, les filaments sont revêtus d'un ensimage par passage sur un organe ensimeur. Ce dépôt est nécessaire à l'obtention des fils et permet leur association avec d'autres matières organiques et/ou inorganiques pour réaliser des composites.

L'ensimage sert en premier lieu de lubrifiant et protège les fils de l'abrasion résultant du frottement à grande vitesse des fils sur divers organes lors du procédé précédemment cité.

L'ensimage peut également assurer, notamment après polymérisation, l'intégrité des fils susmentionnés, c'est à dire la liaison des filaments entre eux au sein des fils. Cette intégrité est notamment recherchée dans les applications textiles où les fils sont soumis à de fortes contraintes mécaniques. En effet, si les filaments sont peu solidaires les uns des autres, ils se rompent plus facilement et viennent perturber le fonctionnement des machines textiles. Les fils non intègres sont, de plus, considérés comme difficiles à manipuler.

Cependant, l'ensimage est également employé dans des cas où cette intégrité n'est pas recherchée, comme pour les fibres de renforcement, lorsqu'une vitesse élevée d'imprégnation par la matière à renforcer est recherchée. Ainsi, dans la fabrication par exemple de tuyaux par des techniques d'imprégnation directe et d'enroulement filamentaire, on met en oeuvre des fils ouverts dans lesquels les filaments sont dissociés les uns des autres. Des quantités d'ensimage faibles, notamment inférieures à 0,5 % en poids, sont alors utilisées.

L'ensimage facilite également le mouillage et/ou l'imprégnation des fils par les matières à renforcer et aide à la création de liaisons entre lesdits fils et lesdites matières. De la qualité de l'adhésion de la matière aux fils et de l'aptitude au mouillage et/ou à l'imprégnation des fils par la matière dépendent notamment les propriétés mécaniques des composites obtenus à partir de ladite matière et desdits fils.

La plupart des ensimages actuellement utilisés sont des ensimages aqueux simples à manipuler, mais devant être déposés en grandes quantités sur les filaments pour être efficaces. L'eau représente généralement plus de 90 % en poids de ces ensimages (pour des raisons de viscosité notamment), ce qui oblige à sécher les fils avant leur utilisation, l'eau pouvant nuire à la bonne adhésion entre les fils et les matières à renforcer. Ces séchages sont longs et coûteux et leur efficacité n'est pas toujours optimale ; ils nécessitent la mise en oeuvre d'étuves de grande capacité. De plus, lorsqu'ils sont faits pendant l'opération de fibrage (c'est à dire avant collecte des fils obtenus par rassemblement des filaments), au niveau des filaments (WO 92/05122) ou au niveau des fils (US-A 3 853 605), ils nécessitent l'implantation de dispositifs de séchage sous chaque filière et lorsqu'ils sont faits sur des enroulements de fils, ils entraînent des risques de migration irrégulière et/ou sélective des composants de l'ensimage au sein des enroulements (les ensimages aqueux ayant déjà tendance à se répartir sur les fils de façon irrégulière du fait de leur nature), et éventuellement des phénomènes de coloration des fils ou de déformation des enroulements. D'autre part, la déformation des enroulements s'observe fréquemment, en l'absence de séchage, sur les enroulements à bords droits (stratifils) de fils fins (c'est à dire présentant un « titre » ou « masse linéique » de 300-600 tex(g/km) ou moins) revêtus d'ensimages aqueux.

C'est pour remédier à ces inconvénients qu'a été développé un nouveau type d'ensimages pratiquement dénués de solvants, dits anhydres. Les ensimages anhydres sont des solutions polymérisables et/ou réticulables qui contiennent éventuellement des solvants organiques et/ou de l'eau en faibles proportions, en général inférieures à 5 % en poids. Ils se distinguent avantageusement des ensimages aqueux par leur aptitude à se répartir de manière homogène et uniforme à la surface des filaments, c'est à dire en formant des films d'épaisseurs constantes et en ce qu'ils rendent inutile tout traitement ultérieur de séchage ou d'élimination du solvant, car les faibles quantités de celui-ci s'évaporent lors du dépôt de l'ensimage sur les filaments et de la polymérisation de l'ensimage.

D'autre part, les quantités d'ensimage anhydre déposées sur les filaments sont bien moindres que celles d'ensimage aqueux ; ainsi, dans un dépôt au moyen d'un rouleau ensimeur, il se forme à la surface de celui-ci une pellicule d'épaisseur n'atteignant pas 15 µm dans le cas d'un ensimage anhydre, au lieu d'une pellicule de 90 µm d'épaisseur approximative pour un ensimage aqueux. Ces moindres quantités d'ensimage anhydre sont du reste déposées sur les filaments avec un rendement bien supérieur pouvant atteindre 100 % pour un choix judicieux des conditions opératoires, tandis que ce rendement est généralement de l'ordre de 40 à 75 % avec les ensimages aqueux.

Les ensimages anhydres se répartissent principalement en trois catégories.

La première regroupe les ensimages polymérisables au rayonnement ultraviolet, tels que décrits dans le brevet EP 0 570 283 et comprennent par exemple :
- au moins un monomère et/ou oligomère mono- ou polyinsaturé du type polyester acrylate, époxy acrylate, composé siliconé, uréthane acrylate ;
- au moins un photoamorceur tel que la benzoine, l'acétophénone, la benzophénone, la sulfonylacétophénone et leurs dérivés, ainsi que les thioxanthones ;
- le cas échéant au moins un solvant organique ; et éventuellement
- des additifs tels qu'au moins un agent mouillant, un promoteur d'adhésion, un agent anti-retrait, un agent de pontage consistant notamment en un silane.

La deuxième famille d'ensimages anhydres est celle des ensimages polymérisables et/ou réticulables thermiquement, tels que décrits dans les demandes de brevets FR 2 713 625 et FR 2.743 361.

A titre d'exemple, le système de base de ces compositions comprend :
- un constituant acrylique et un peroxyde amorceur radicalaire thermique,
- ou un constituant époxy et un constituant anhydride qui polymérisent en réagissant l'un avec l'autre.

La troisième catégorie d'ensimages anhydres fait partie de l'enseignement de la demande FR 2 763 328 : il s'agit des ensimages polymérisables à température ambiante, dont les systèmes de base peuvent contenir un ou plusieurs monomères homopolymérisables et/ou au moins deux monomères copolymérisables sans apport extérieur d'énergie. Dans l'hypothèse d'une copolymérisation de deux monomères ou mélanges de monomères, ceux-ci peuvent être déposés sur les filaments sous forme de leur mélange en solution, immédiatement après que ce mélange a été formé ou sous forme d'une première solution stable contenant le premier monomère ou mélange de monomères et d'une seconde solution stable contenant le second monomère ou mélange de monomères. Dans cette dernière variante, la première solution est appliquée sur les filaments, la seconde l'est ultérieurement, au plus tard lors du rassemblement des filaments en fils. Quoi qu'il en soit, la copolymérisation démarre en général dès la mise en présence du premier et du second monomères ou mélanges de monomères les uns avec les autres sur les filaments et, le cas échéant, du ou des catalyseurs requis.

Les traitements d'exposition au rayonnement ultraviolet et les traitements thermiques requis pour polymériser les ensimages des deux premiers types précédemment cités sont effectués en une ou en plusieurs fois, après le rassemblement des filaments en fils. On effectue ainsi quelquefois, selon l'utilisation envisagée et la nature des fils, un prétraitement d'irradiation ou de chauffage au moment de la collecte des fils sous diverses formes d'enroulements, de manière à prépolymériser l'ensimage, dont la polymérisation proprement dite est réalisée dans un traitement ultérieur d'irradiation ou de chauffage, lorsque le fil est déroulé en vue de la mise en oeuvre spécifique à laquelle il est destiné, textile ou de renforcement de matières organiques ou inorganiques. En effet, le fil revêtu de la composition non encore polymérisée ne présente pas une intégrité au sens ordinaire du terme, car les filaments gainés qui le constituent peuvent glisser les uns sur les autres. Ce fil est alors aisément manipulable et, lorsqu'il est bobiné sous forme d'enroulements, peut facilement être extrait des enroulements sans avoir subi au préalable de traitement de polymérisation de l'ensimage. Le fil revêtu de la composition d'ensimage non encore polymérisée a, par ailleurs, une très bonne aptitude au mouillage et à l'imprégnation par des matières à renforcer, l'imprégnation pouvant ainsi se faire plus rapidement(gain de productivité) et les composites obtenus présentant ainsi un aspect plus homogène et certaines propriétés mécaniques améliorées.

Cependant, comme décrit dans le brevet EP 0 570 283, la polymérisation de l'ensimage par irradiation aux ultraviolets d'un fil sous forme d'enroulement peut également comporter des avantages.

L'un des problèmes se posant avec le plus d'acuité au cours de la fabrication de fils constitués au moins en partie de verre est celui de la casse que l'on souhaite éviter autant que possible. En effet, lorsque l'un ou plusieurs des filaments destinés à constituer le fil commencent à se rompre, des conséquences graves surviennent rapidement. En premier lieu, il est à souligner que l'ensimage recouvrant les filaments agit comme une colle ; quand un filament ainsi recouvert d'ensimage se rompt, il a d'autant plus tendance à adhérer à tous les éléments avec lesquels il entre en contact qu'il est collant. Il risque d'être entraîné dans les divers mécanismes en rotation, provoquer l'arrachement d'autres filaments ayant jusqu'alors préservé leur intégrité, et entraîner la formation d'enroulements susceptibles de détériorer des éléments de dépose de l'ensimage tels que feutres, râcles ou de rayer la surface des rouleaux ensimeurs.

D'autre part, la rupture d'un ou plusieurs filaments a comme autre grave conséquence la formation de gouttes de matériau fondu, notamment de verre, dont la chute constitue un risque d'incendie, par exemple par inflammation de l'ensimage, plus ou moins spontanée en particulier dans le cas de l'ensimage anhydre. Par ailleurs, la chute de gouttes de filaments fondus sur le rouleau ensimeur en dégrade la surface, ce qui nuit à la dépose régulière d'ensimage et peut provoquer de nouvelles casses après une relance ultérieure.

L'art antérieur connaît des documents US 3 560 178, US 4 036 622 et FR 2 020 384, des procédés permettant de détecter la rupture complète du fil après assemblage des filaments ou la rupture complète de filaments avant assemblage.

Un autre problème survient lorsque la casse se produit au niveau de filaments périphériques ; l'équilibre dynamique du système est alors relativement peu perturbé, de sorte que le fibrage et le bobinage peuvent se poursuivre en produisant un fil de plus en plus fin. Les conséquences peuvent en être plus ou moins graves, notamment dans le cas d'un roving destiné à la production d'un tissu ou de grilles pour lesquelles une certaine résistance mécanique est requise, telles que grilles-supports pour meules abrasives.

Il importe par conséquent de détecter la casse des premiers filaments le plus tôt possible afin de prendre les dispositions permettant d'éviter que ne surviennent les problèmes qui viennent d'être décrits ou la destruction d'éléments contenant des polymères tels que tuyaux, fils électriques, composants de capteurs... Ces dispositions peuvent consister en la commande de l'immobilisation du rouleau ensimeur, de la fermeture du capot de protection du rouleau ensimeur, de l'immobilisation du bobinoir...

A cette fin, l'invention a pour objet un procédé de fabrication d'un fil continu dans lequel on forme une multiplicité de filaments continus par étirage mécanique d'une multiplicité de filets de matière(s) thermoplastique(s) fondue(s) et l'on rassemble ces filaments en au moins un fil. Ce procédé se distingue par le fait que l'on contrôle en permanence la tension exercée par un ensemble de certains ou de la totalité de ces filaments, en détectant le passage de cette tension en dessous d'une valeur prédéterminée. Cette valeur est à choisir au cas par cas selon l'invention, de manière à indiquer la casse du plus petit nombre possible de filaments, mais avec un degré de certitude quasi absolu. Une grande sensibilité de détection est donc requise, nécessitant l'utilisation de montages à mise au point et réglage extrêmement précis et/ou de détecteurs particuliers, eux-mêmes très précis.

Selon un mode de réalisation particulièrement pratique de l'invention, la tension contrôlée est exercée par l'ensemble susmentionné de filaments sur une roulette présentant une gorge périphérique dans laquelle ils sont engagés. Il s'agit opportunément de la roulette de rassemblement, dans la gorge de laquelle s'engagent une multiplicité de filaments de directions incidentes différentes et convergentes, de telle sorte qu'ils forment un unique brin, produit intermédiaire dans la fabrication du fil.

Les modes de liaison de l'ensemble de filaments dont la tension est à contrôler au moyen de contrôle de cette tension sont divers.

Selon une première variante, l'ensemble de filaments est relié à un levier de telle sorte que celui-ci pivote lorsque la tension contrôlée passe en dessous de la valeur-seuil prédéterminée, un détecteur magnétique étant alors actionné. Cette variante est illustrée en détails dans la description des dessins ci-dessous.

Les seconde et troisième variantes permettent avantageusement l'emploi d'une roulette de rassemblement quasiment fixe ; une telle caractéristique présente notamment un grand intérêt pour la facilité de relance de la machine par rapport à celle obtenue avec la première variante ci-dessus. Non seulement ce type de mode de réalisation du procédé interdit toute rotation de la roulette, mais il en rend de plus tout autre mouvement peu recommandable du fait de la présence de l'appareillage auxiliaire équipant nécessairement la roulette, tel que conduits, capteurs, système de pulvérisation de relance... Ainsi, conformément à une seconde et à une troisième variantes, la tension des filaments est contrôlée au moyen d'une jauge de contrainte travaillant en flexion, respectivement en torsion. Une jauge de contrainte est apte à détecter des variations de contrainte très faibles.

Avantageusement, comme expliqué précédemment, la roulette de rassemblement est alors montée quasiment fixe sur un arbre. Dans un cas la jauge de contrainte est montée longitudinalement par rapport à l'arbre de telle sorte qu'elle soit soumise à une flexion lorsque des filaments cassent, entraînant une variation de la tension exercée par l'ensemble des filaments sur la roulette de rassemblement. Dans l'autre cas, l'arbre est susceptible d'une très faible rotation, imperceptible pour un observateur, et la jauge de contrainte est montée coaxialement par rapport à l'axe de cette rotation de telle sorte qu'elle soit soumise à une torsion lorsque des filaments cassent.

L'utilisation d'une jauge de contrainte travaillant en torsion selon la troisième variante permet de plus avantageusement une réelle mesure de la tension du fil en continu. Cela n'est pas possible selon la seconde variante, dans laquelle la force détectée comporte une composante de frottement susceptible de varier en fonction de critères complexes.

Selon le mode de réalisation le plus courant du procédé de l'invention, tous les filaments constituant le fil sont en verre. L'invention n'exclut cependant pas la variante dans laquelle le fil est constitué de filaments de verre et de filaments en une seconde matière thermoplastique, notamment organique. Seuls les filaments de verre peuvent alors être munis d'un dépôt d'ensimage ou d'un premier constituant d'ensimage, les filaments organiques étant revêtus d'un second constituant d'ensimage éventuellement susceptible de réagir avec le premier constituant. Par filaments organiques, on entend des filaments polymères thermoplastiques, tels qu'en polyoléfine (polyéthylène, polypropylène), polyamide ou polyester. Ces filaments polymères peuvent être projetés entre les filaments de verre déjà ensimés, avant le rassemblement de tous ces filaments en fil, comme décrit dans le brevet EP 0 599 695.

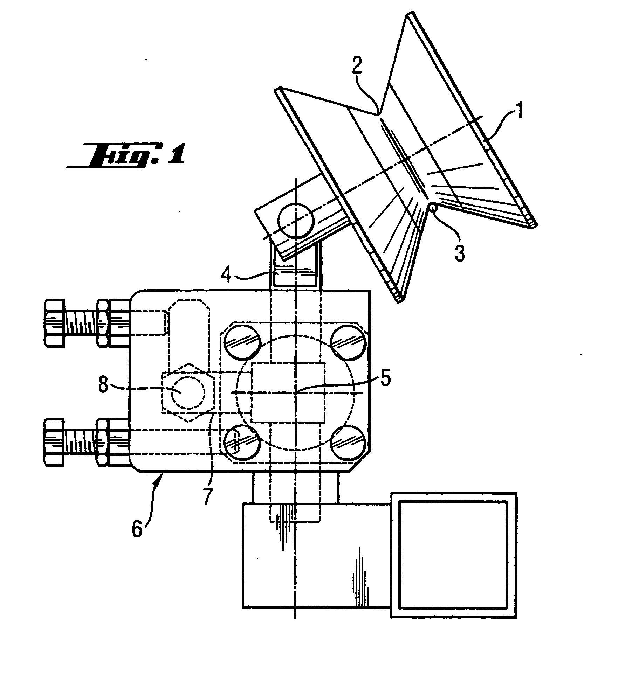

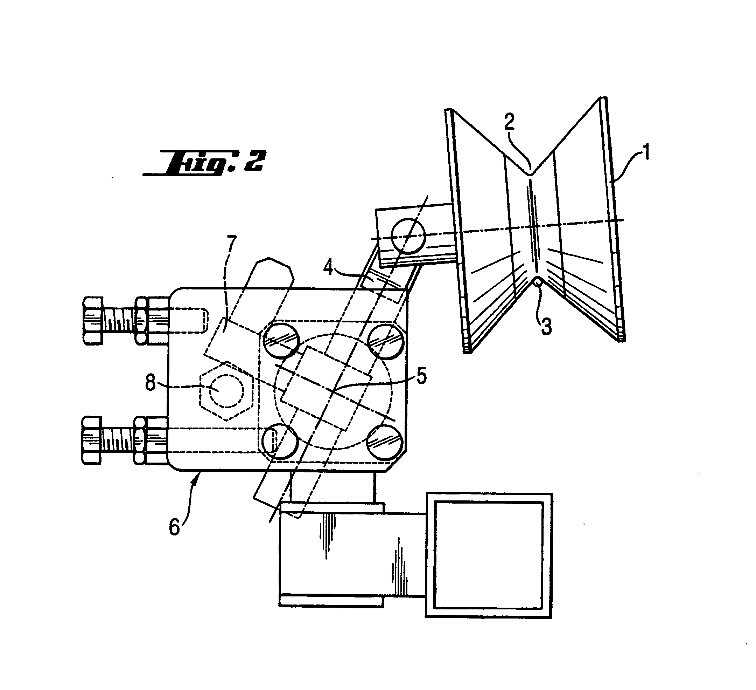

D'autres caractéristiques et avantages de l'invention apparaîtront dans la description qui suit des dessins en annexe, dans lesquels les figures 1 et 2 représentent un mode de réalisation de la première variante du procédé mentionnée précédemment, en l'absence, respectivement en présence de casse de filaments.

Une roulette de rassemblement 1 comporte une gorge périphérique 2 dans laquelle elle reçoit une multiplicité de filaments de directions convergentes réunis en un brin 3. La roulette 1 est montée à pivotement sur un arbre 4 lui-même pivotant par rapport à un axe 5 situé dans un boîtier 6. Celui-ci est fixé de manière correspondant à une position de la feuille de la figure 1 grand axe horizontal (position qui sera conservée dans les explications qui suivent) et longueur supérieure relevée vers le haut, c'est à dire en position décalée de l'axe 5 à partir de la direction verticale. L'arbre 4 comporte, au niveau de l'axe 5, un onglet métallique 7 sensiblement perpendiculaire à l'arbre 4. Une cellule de détection magnétique 8 est par ailleurs installée dans le boîtier 6. Lorsque la tension exercée par les filaments du brin 3 sur la roulette 1 est au moins égale à une valeur fixe dépendant du poids et de la configuration des éléments du dispositif, c'est à dire lorsque par exemple tous les filaments du brin 3 ont préservé leur intégrité, comme représenté sur la figure 1, la force appliquée par le brin 3 sur la roulette 1, dirigée vers le haut et la droite sur le dessin, compense le poids de la roulette de manière à immobiliser l'arbre 4 dans la position représentée en figure 1, dans laquelle l'onglet métallique 7 est placé en face de la cellule 8. Celle-ci détectant l'onglet 7 délivre une tension de 10 Volts.

Lorsque au contraire un nombre tel de filaments rompt que la tension exercée par le brin 3 devient inférieure à la valeur fixe précitée, la force réactive appliquée par le brin 3 ne compense plus le poids de la roulette 1, et l'arbre 4 pivote dans le sens des aiguilles d'une montre de sorte que l'onglet métallique 7 est déplacé hors du champ de détection de la cellule 8. Celle-ci délivre alors une tension de 0 Volt commandant des fonctions telles que l'arrêt du rouleau ensimeur, la fermeture du capot de protection de ce dernier, l'arrêt du bobinoir sur lequel est enroulé le fil obtenu...

Ainsi l'invention met-elle à disposition un procédé dans lequel la casse du fil est détectée très tôt, dès la rupture des premiers filaments et en tous cas bien avant celle de la totalité du brin, afin que puissent être prises les mesures permettant d'éviter que les problèmes découlant de la casse (entraînement de fibres dans des mécanismes en rotation, propagation et amplification du phénomène d'arrachement de fibres, détérioration des mécanismes en rotation, incendie...) n'atteignent un degré de gravité trop important.

## Revendications

1. Procédé de fabrication d'un fil (3) continu dans lequel on forme une multiplicité de filaments continus par étirage mécanique d'une multiplicité de filets de matière(s) thermoplastique(s) fondue(s), on rassemble ces filaments en au moins un fil (3), **caractérisé en ce qu'**on contrôle en permanence la tension exercée par un ensemble de certains ou de la totalité de ces filaments, en détectant le passage de cette tension en dessous d'une valeur prédéterminée indiquant la rupture des premiers filaments.

2. Procédé selon la revendication 1, **caractérisé en ce que** la tension contrôlée est exercée par ledit ensemble de filaments sur une roulette (1) présentant une gorge périphérique (2) dans laquelle ils sont engagés.

3. Procédé selon la revendication 1 ou 2, **caractérisé en ce que** ledit ensemble de filaments est relié à un levier de telle sorte que celui-ci pivote lorsque la tension contrôlée passe en dessous de ladite valeur prédéterminée, un détecteur magnétique étant alors actionné.

4. Procédé selon la revendication 1 ou 2, **caractérisé en ce que** la tension est contrôlée au moyen d'une jauge de contrainte travaillant en flexion.

5. Procédé selon la revendication 1 ou 2, **caractérisé en ce que** la tension est contrôlée au moyen d'une jauge de contrainte travaillant en torsion.

6. Procédé selon l'une des revendications 1 à 5, **caractérisé en ce que** les filaments sont constitués exclusivement de verre.

7. Procédé selon l'une des revendications 1 à 5, **caractérisé en ce que** les filaments sont constitués de verre et d'au moins une seconde matière thermoplastique.

8. Filière de fabrication d'un fil (3) continu par formage d'une multiplicité de filaments continus obtenus en étirant mécaniquement une multiplicité de filets de matiêre(s) thermoplastique(s) fondue(s) et par rassemblement desdits filaments **caractérisée en ce qu'elle** comporte des moyens de contrôle en permanence de la tension exercée par un ensemble de certains ou de la totalité desdits filaments, lesdits moyens étant en outre capables de détecter le passage de cette tension en dessous d'une valeur prédéterminée indiquant la rupture des premiers filaments.

## Patentansprüche

1. Verfahren zur Herstellung eines endlosen Fadens (3), in welchem eine Vielzahl endloser Filamente durch mechanisches Ziehen einer Vielzahl von Strahlen aus einem oder mehreren geschmolzenen wärmeformbaren Materialien gebildet wird und diese Filamente zu mindestens einem Faden (3) vereinigt werden, **dadurch gekennzeichnet, dass** die Spannung, die von einer Gruppe aus einigen oder allen dieser Filamente ausgeübt wird, ständig überwacht wird, indem das Sinken der Spannung unter einen festgelegten Wert das Reißen von ersten Filamenten anzeigt.

2. Verfahren nach Anspruch 1, **dadurch gekennzeichnet, dass** die kontrollierte Spannung von der Gruppe aus Filamenten auf eine Rolle (1) ausgeübt wird, die eine umfängliche Nut (2) besitzt, in welcher sie geführt werden.

3. Verfahren nach Anspruch 1 oder 2, **dadurch gekennzeichnet, dass** die Gruppe aus Filamenten derart mit einem Hebel verbunden wird, dass dieser kippt, wenn die kontrollierte Spannung auf unter den festgelegten Wert sinkt, wobei dann ein magnetischer Detektor betätigt wird.

4. Verfahren nach Anspruch 1 oder 2, **dadurch gekennzeichnet, dass** die Spannung mittels eines Biegungsdehnungsmessstreifens kontrolliert wird.

5. Verfahren nach Anspruch 1 oder 2, **dadurch gekennzeichnet, dass** die Spannung mittels eines Torsionsdehnungsmessstreifens kontrolliert wird.

6. Verfahren nach einem der Ansprüche 1 bis 5, **dadurch gekennzeichnet, dass** die Filamente ausschließlich aus Glas bestehen.

7. Verfahren nach einem der Ansprüche 1 bis 5, **dadurch gekennzeichnet, dass** die Filamente aus Glas und mindestens einem zweiten wärmeformbaren Material bestehen.

8. Spinndüse zur Herstellung eines endlosen Fadens (3) durch Formgebung einer Vielzahl endloser Filamente, die erhalten werden, indem mechanisch eine Vielzahl von Strahlen aus einem oder mehreren geschmolzenen wärmeformbaren Materialien gezogen wird und diese Filamente vereinigt werden, **dadurch gekennzeichnet, dass** sie Mittel zur ständigen Kontrolle der Spannung umfasst, die von einer Gruppe aus einigen oder allen der Filamente ausgeübt wird, wobei diese Mittel außerdem in der Lage sind, das Sinken dieser Spannung auf unter einen festgelegten Wert nachzuweisen, der das Reißen von ersten Filamenten anzeigt.

## Claims

1. A method for manufacturing a continuous yarn (3) in which a multiplicity of continuous filaments are formed by mechanical drawing of a multiplicity of streams of molten thermoplastic material(s), the filaments are assembled into at least one yarn (3), **characterised in that** the tension exerted by an assembly of some or all of the filaments is continuously monitored, by detecting the passage of the tension below a predetermined value indicating the breakage of the first filaments.

2. A method according to claim 1, **characterised in that** the monitored tension is exerted by said assembly of filaments on a small wheel (1) having a peripheral groove (2) in which they are engaged.

3. A method according to claim 1 or 2, **characterised in that** said assembly of filaments is connected to a lever such that the latter pivots when the monitored tension passes below said predetermined value, a magnetic detector then being actuated.

4. A method according to claim 1 or 2, **characterised in that** the tension is monitored by means of a strain gauge working in flexion.

5. A method according to claim 1 or 2, **characterised in that** the tension is monitored by means of a strain gauge working in torsion.

6. A method according to any one of claims 1 to 5, **characterised in that** the filaments are composed exclusively of glass.

7. A method according to any one of claims 1 to 5, **characterised in that** the filaments are composed of glass and of at least a second thermoplastic material.

8. A die for manufacturing a continuous yarn (3) by forming a multiplicity of continuous filaments obtained by mechanically drawing a multiplicity of streams of molten thermoplastic material(s) and by assembling said filaments, **characterised in that** it includes means for continuously monitoring the tension exerted by an assembly of some or all of said filaments, said means being further capable of detecting the passage of the tension below a predetermined value indicating the breakage of the first filaments.
